# EUROPÄISCHE PATENTANMELDUNG

(11) **EP 3 748 144 A1**
(43) Veröffentlichungstag der Anmeldung: **09.12.2020**
(21) Anmeldenummer: 20171485.4
(22) Anmeldetag: 27.04.2020
(51) Int. Cl.: F02B 43/00, F02B 69/04, F02B 75/04, F02D 15/02

(54) **VERFAHREN ZUM BETREIBEN EINES GROSSMOTORS SOWIE GROSSMOTOR**

(30) Priorität: 03.06.2019 EP 19177931
(71) Anmelder: Winterthur Gas & Diesel AG, 8401 Winterthur (CH)
(72) Erfinder: Hanz, Timo, 8320 Fehraltorf (CH); Akrour, Matthieu, 76710 Montville (FR); Gläser, Robert, 8442 Hettlingen (CH)
(74) Vertreter: Intellectual Property Services GmbH

(57) **Zusammenfassung**

Es wird ein Verfahren vorgeschlagen zum Betreiben eines Grossmotors, wobei der Grossmotor (20) mindestens einen Zylinder (21) umfasst, welcher einem Brennraum aufweist der durch einen entlang einer Zylinderachse hin- und herbewegbaren Kolben (23) begrenzt wird. Ein Luft-Brennstoffgemisch wird im Brennraum über die Bewegung des Kolbens (23) mit einem Kompressionsverhältnis verdichtet, und ein Betriebsparameter des Grossmotors (20) wird kontinuierlich oder in regelmässigen Abständen ermittelt. Anhand des Betriebsparameters wird ein optimiertes Kompressionsverhältnis für das Luft-Brennstoffgemisch ermittelt, und das Kompressionsverhältnis wird auf das optimierte Kompressionsverhältnis umgestellt.

## Beschreibung

Die Erfindung betrifft ein Verfahren zum Betreiben eines Grossmotors mit mindestens einem Zylinder, sowie einen Grossmotor gemäss dem Oberbegriff des unabhängigen Patentanspruchs der jeweiligen Kategorie.

Grossmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betreib, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossmotoren haben typischerweise Zylinder, deren Innendurchmesser (Bohrung) mindestens 200 mm beträgt. Heutzutage werden Grossmotoren mit einer Bohrung von bis zu 960 mm oder sogar noch mehr eingesetzt.

Es sind verschiedene Arten von Grossmotoren bekannt, die jeweils als Zweitakt- oder als Viertakt-Motoren ausgestaltet sein können. Unter den Aspekten des wirtschaftlichen und effizienten Betriebs, der Einhaltung von Abgasgrenzwerten und der Verfügbarkeit von Ressourcen sucht man auch nach Alternativen zum klassischerweise als Brennstoff für Grossmotoren verwendeten Schweröl oder Diesel. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe als bekannte Alternativen zum Schweröl sind andere schwere Kohlenwasserstoffe, die insbesondere als Rückstände bei der Raffinerie von Erdöl übrigbleiben, Alkohole, insbesondere Methanol oder Ethanol, Benzin, Diesel, oder auch Emulsionen oder Suspensionen. So ist es z. B. bekannt, die als MSAR (Multiphase Superfine Atomised Residue) bezeichneten Emulsionen als Brennstoff zu verwenden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgase wie LNG (liquefied natural gas) oder LPG (liquefied petroleum gas) bekannt.

Eine ebenfalls bekannte Alternative zum reinen Betrieb mit Schweröl ist es, Grossmotoren so auszugestalten, dass sie mit zwei oder noch mehr unterschiedlichen Brennstoffen betrieben werden können, wobei der Motor je nach Betriebssituation oder Umgebung entweder mit dem einen Brennstoff oder mit dem anderen Brennstoff betrieben wird. Ein solcher Grossmotor, der auch als Multi-Fuel Grossmotor bezeichnet wird, kann während des Betriebs von einem ersten Modus, in welchem ein erster Brennstoff verbrannt wird, in einen zweiten Modus, in welchem ein zweiter Brennstoff verbrannt wird, umgeschaltet werden und umgekehrt.

Ferner sind auch Grossmotoren bekannt, die gleichzeitig mit mindestens zwei verschiedenen Brennstoffen betreibbar sind. Dabei ist es möglich, dass in einem oder mehreren Zylindern gleichzeitig zwei verschiedene Brennstoffe verbrannt werden, oder auch, dass in einer ersten Gruppe von Zylindern nur ein erster Brennstoff verbrannt wird und gleichzeitig in einer anderen Gruppe von Zylindern nur ein zweiter, von dem ersten Brennstoff verschiedener Brennstoff verbrannt wird.

Eine bekannte Ausgestaltung eines Grossmotors, der mit zwei unterschiedlichen Brennstoffen betrieben werden kann, ist der Motorentyp, für den heutzutage der Begriff "Dual-Fuel Motor" gebräuchlich ist. Diese Motoren sind einerseits in einem Gasmodus betreibbar, in welchem ein gasförmiger Brennstoff, z.B. Erdgas oder Methan, zur Verbrennung in den Brennraum eingebracht wird, und andererseits in einem Flüssigmodus, in welchem ein flüssiger Brennstoff wie Schweröl oder ein anderer flüssiger Brennstoff in demselben Motor verbrannt werden können. Diese Grossmotoren können dabei sowohl Zweitakt- als auch Viertaktmotoren sein, insbesondere auch längsgespülte Zweitakt-Grossdieselmotoren.

Grossmotoren, die mit mindestens zwei oder auch mehr verschiedenen flüssigen oder gasförmigen Brennstoffen betrieben werden können, werden häufig, je nach aktuell verwendetem Brennstoff in unterschiedlichen Betriebsmodi betrieben. In dem häufig als Dieselbetrieb bezeichneten Betriebsmodus erfolgt die Verbrennung des Brennstoffs in der Regel nach dem Prinzip der Kompressionszündung oder Selbstzündung des Brennstoffs. In dem häufig als Ottobetrieb bezeichneten Modus erfolgt die Verbrennung durch die Fremdzündung eines zündfähigen vorgemischten Luft-Brennstoff-Gemisches. Diese Fremdzündung kann beispielsweise durch einen elektrischen Funken erfolgen, z. B. mit einer Zündkerze, oder auch durch die Selbstzündung einer kleinen eingespritzten Brennstoffmenge, welche dann die Fremdzündung eines anderen Brennstoffs bewirkt. Häufig wird dabei die für die Selbstzündung vorgesehene kleine Brennstoffmenge in eine mit dem Brennraum verbundene Vorkammer eingespritzt.

Bei den oben genannten Dual-Fuel Motoren ist es beispielsweise für den Gasmodus bekannt, das Gas im gasförmigen Zustand mit der Spülluft zu vermischen, um so im Brennraum des Zylinders ein zündfähiges Gemisch zu erzeugen. Bei diesem Niederdruckverfahren erfolgt dann die Zündung des Gemisches im Zylinder üblicherweise, indem im richtigen Moment eine kleine Menge flüssiger, selbstzündender Brennstoff in den Brennraum des Zylinders bzw. in die Vorkammer eingespritzt wird, die dann zur Zündung des Luft-GasGemisches führt.

Ferner sind auch Mischformen aus dem Ottobetrieb und dem Dieselbetrieb bekannt.

Es sind auch Grossmotoren bekannt, die als reine Gasmotoren ausgestaltet sind, also als Motoren, die nur mit Gas als Brennstoff betrieben werden.

Ganz gleich ob es sich um einen Dual-Fuel Motor oder um einen reinen Gasmotor handelt, ist der Vorgang der Einbringung des gasförmigen Brennstoffs in den Brennraum des Zylinders und die Erzeugung des Luft-GasGemisches von entscheidender Bedeutung für den zuverlässigen, schadstoffarmen und sicheren Betrieb eines solchen Motors.

Im Gasmodus ist insbesondere das Einstellen des korrekten Verhältnisses von Spülluft zu Gas, also des Luft-Brennstoff-Verhältnissses, von entscheidender Bedeutung. Das Luft-Brennstoffverhältnis kann beispielsweise durch den Lambda-Wert (λ-Wert) angegeben werden, welcher das Verhältnis aus der im Zylinder gefangenen Luftmasse zu derjenigen Luftmasse angibt, welche für eine stöchiometrische Verbrennung benötigt wird. In einem Grossdieselmotor wird die Spül- oder Ladeluft üblicherweise von einem Turbolader zur Verfügung gestellt, der einen Spül- oder Ladeluftdruck generiert, welcher von der Last des Motors und damit von der Leistung bzw. vom Drehmoment bzw. der Drehzahl des Motors abhängt. Für einen gegebenen Ladeluftdruck lässt sich die Masse der Luft im Zylinder berechnen und dann für das jeweilige benötigte Antriebsmoment, welches vom Motor generiert wird, bzw. für die gewünschte Drehzahl eine geeignete Menge des gasförmigen Brennstoffs bestimmen, der für diesen Betriebszustand zu einem optimalen Verbrennungsprozess führt.

Insbesondere, wenn der Gasmodus nach dem Otto-Prinzip betrieben wird, ist die korrekte Einstellung des Luft-Brennstoff-Verhältnisses von entscheidender Bedeutung für einen möglichst schadstoffarmen, effizienten und wirtschaftlichen Betrieb des Motors. Ist der Gasanteil zu hoch, so wird das Luft-Brennstoff-Gemisch zu fett. Die Verbrennung des Gemischs erfolgt zu schnell oder zu früh, was zum Klopfen des Motors führen kann. Ist der Luftanteil zu hoch, , so ist das Luft-Brennstoff-Gemisch zu mager, und es kann zu Zündaussetzern kommen, was natürlich auch negativ im Hinblick auf einen effizienten und schadstoffarmen Betrieb des Motors ist.

Man ist daher bei Grossmotoren insbesondere im Gasmodus bemüht, den Lambda-Wert in einem optimalen Bereich zwischen der Klopfgrenze einerseits und der Zündaussetzgrenze andererseits zu halten, da ansonsten auch unnormale Verbrennungsphänomene auftreten können, welche zu Schäden am Grossmotor führen können. Bei einem Grossmotor, der im Gasmodus nach dem Otto-Prinzip betrieben wird, kann der optimale Lambda-Wert beispielsweise zwischen 2.0 und 3.0 liegen und bevorzugt zwischen 2.3 und 3.0. Dabei können sich die Grenzen für den Lambda-Wert in Abhängigkeit von der Last, mit welcher der Motor betrieben wird, etwas verschieben.

Üblicherweise werden Grossmotoren so ausgelegt, dass das Verdichtungsverhältnis bzw. das Kompressionsverhältnis am 100% Lastpunkt, also bei Volllast optimiert ist und der Grossmotor dort einen möglichst guten Kompromiss zwischen dem Verbrennungsverhalten und dem Wirkungsgrad aufweist, das heisst, die Grossmotoren sind so ausgelegt, dass sie am 100% Lastpunkt, also bei Vollast und maximaler Geschwindigkeit den höchst möglichen thermodynamischen Wirkungsgrad haben.

Das Kompressionsverhältnis ist eine geometrische Grösse, welche das Verhältnis eines ersten Volumens des Brennraumes vor dem Verdichten des Luft-Brennstoffgemisches zu einem verbliebenen zweiten Volumen des Brennraumes nach dem Verdichten des Luft-Brennstoffgemisches ist.

Die Optimierung des Brennverhaltens am 100% Lastpunkt hat zur Folge, dass in tieferen Lastbereichen, also beispielsweise bei einem tieferen Mitteldruck, der Wirkungsgrad des Grossmotors nicht mehr optimal ist.

Ausgehend von diesem Stand der Technik ist es daher eine Aufgabe der Erfindung, ein Verfahren zum Betreiben ein Grossmotors vorzuschlagen, welches einen möglichst optimalen Wirkungsgrad des Grossmotors über den gesamten Lastbereich ermöglicht, wobei unnormale Verbrennungsphänomene vermieden werden. Ferner ist es eine Aufgabe der Erfindung, einen entsprechenden Grossmotor vorzuschlagen.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Verfahren zum Betreiben eines Grossmotors vorgeschlagen, der mindestens einen Zylinder umfasst, welcher einen Brennraum aufweist, der durch einen entlang einer Zylinderachse hin- und herbewegbaren Kolben begrenzt wird. Ein Luft-Brennstoffgemisch wird im Brennraum über die Bewegung des Kolbens mit einem Kompressionsverhältnis verdichtet, und ein Betriebsparameter des Grossmotors wird kontinuierlich oder in regelmässigen Abständen ermittelt, um anhand des Betriebsparameters ein optimiertes Kompressionsverhältnis für das Luft-Brennstoffgemisch zu ermitteln. Das Kompressionsverhältnis wird auf das optimierte Kompressionsverhältnis umgestellt.

Das Kompressionsverhältnis ist ein rein geometrisches Verhältnis von zwei Volumina des Brennraums, wobei das erste Volumen das Volumen des Brennraumes vor dem Verdichten des Luft-Brennstoffgemisches ist, und das zweite Volumen das Volumen des Brennraumes nach dem Verdichten des Luft-Brennstoffgemisches. Das erste Volumen ist somit das Volumen des Brennraums beim Beginn der Kompression und das zweite Volumen ist das Volumen des Brennraums bei maximaler Kompression, also wenn sich der Kolben im oberen Totpunkt befindet.

Dadurch, dass das Kompressionsverhältnis auf das optimierte Kompressionsverhältnis eingestellt wird, kann der Grossmoter über den gesamten Lastbereich mit einem optimierten Wirkungsgrad betrieben werden. So kann beispielsweise in einem Teillastbetrieb des Grossmotors das Kompressionsverhältnis gegenüber dem Volllastbetrieb erhöht werden, um so den Wirkungsgrad des Grossmotors im Teillastbetrieb zu erhöhen.

In Ausführung der Erfindung kann das Kompressionsverhältnis in Abhängigkeit des Betriebsparameters gesteuert oder geregelt werden. Das Steuern des Kompressionsverhältnisses hat den Vorteil, dass das Kompressionsverhältnis flexibel auf verschiedene Umgebungsbedingungen, wie zum Beispiel Änderungen einer Brennstoffqualität oder Änderungen in einem Betrieb eines Ladeluftkühlers des Grossmotors, eingestellt werden kann.

In einer sehr einfachen Ausführungsform kann beispielsweise das optimierte Kompressionsverhältnis als Funktion der Last, mit welcher der Grossmotor betrieben wird, in einer Look-up Tabelle hinterlegt sein. Der Betriebsparameter ist dann die Last und das optimierte Kompressionsverhältnis für die jeweils aktuelle Last, mit welcher der Grossmotor betrieben wird, kann dann dieser Look-up Tabelle entnommen werden. Das Kompressionsverhältnis wird dann auf dieses optimierte Kompressionsverhältnis eingestellt.

Als Betriebsparameter, anhand dessen entschieden wird, wie das Kompressionsverhältnis verändert wird, eignen sich mehrere Betriebsparameter, insbesondere auch solche, die während des Betriebs des Grossmotors sowieso bekannt sind oder ermittelt werden.

Vorzugsweise wird ein Luft-Brennstoffverhältnis derart eingestellt, dass das Luft-Brennstoffverhältniss zwischen einer Klopfgrenze und einer Zündaussetzgrenze liegt.

Mit dem erfindungsgemässen Verfahren ist es somit möglich, das Kompressionsverhältnis kontinuierlich oder in regelmässigen Abständen an einen oder mehrere Betriebsparameter des Grossmotors anzupassen. Dabei führt eine optimale Änderung des Kompressionsverhältnisses zu einer Erhöhung des Wirkungsgrades des Grossmotors.,

Gemäss einer bevorzugten Ausführungsform ist der Betriebsparameter eine Motorlast oder eine Drehzahl, mit welcher der Grossmotor betrieben wird. Die Motorlast wird dabei üblicherweise in Prozent der Volllast angegeben.

Gemäss einer weiteren bevorzugten Ausführungsform ist der Betriebsparameter vom Transientverhalten des Grossmotors abhängig. Hierzu wird beispielsweise das transiente Verhalten eines Drehmoments oder der Drehzahl des Grossmotors ermittelt. Die Änderungen des Drehmoments oder der Drehzahl können dann beispielsweise als Betriebsparameter verwendet werden oder in den Betriebsparameter einfliessen.

Eine weitere bevorzugte Ausführungsform besteht darin, dass der Betriebsparameter vom Zündsprung abhängig ist, welcher das Verhältnis aus einem maximalen Druck im Zylinder und einem Kompressionsdruck im Zylinder ist. Hierbei kann der Zündsprung konstant sein oder von der Motorlast oder der Drehzahl abhängig sein.

Als Betriebsparameter kann ausserdem ein Zünddruck verwendet werden. Der Zünddruck ist der maximale Druck im Zylinder bei der Verbrennung. Der Zünddruck kann insbesondere konstant sein oder von der Motorlast und /oder der Drehzahl abhängig sein.

Gemäss einer besonders bevorzugten Ausführungsform wird der Zünddruck oder der Zündsprung auf einen vorgegebenen Wert eingestellt z. B. mittels einer Look-up Tabelle gesteuert oder mit einem vorgebaren Sollwert (Zielwert) geregelt.

In Ausführung der Erfindung kann der Betriebsparameter auch ein Zünddruckanstieg sein, und der Zünddruckanstieg insbesondere konstant sein oder von der Motorlast und / oder der Drehzahl abhängig sein. Vorzugsweise wird für den Zündruckanstieg ein Maximalwert vorgegeben, welcher nicht überschritten werden soll.

Als ein anderer Betriebsparameter kann ein Emissionsparameter verwendet werden, wobei der Emissionsparameter insbesondere konstant ist oder von der Motorlast und / oder der Drehzahl abhängig ist. Das Kompressionsverhältnis kann auch in Abhängigkeit des Emissionsparameters in Form eines vorgegebenen Wertes gesteuert, oder in Abhängigkeit eines Emissionssollwertes geregelt werden. Der Emissionsparameter kann insbesondere auf Stickoxide (NOₓ) und / oder Kohlenstoffdioxid (CO₂) und / oder Kohlenstoffmonoxid (CO) und / oder Sauerstoff (O₂) bezogen sein.

Auch ist es möglich, dass der Betriebsparameter das Transientverhalten ist, welches eine Laständerung oder eine Drehzahländerung ist, wobei das Kompressionsverhältnis in Abhängigkeit des Betriebsparameters geregelt wird.

Es versteht sich, dass natürlich auch mehr als ein Betriebsparameter verwendet werden kann, um das Kompressionsverhältnis zu verändern. Eine weitere bevorzugte Massnahme besteht darin, dass das Kompressionsverhältnis verändert wird, falls der Betriebsparameter einen Grenzwert überschreitet oder unterschreitet. Besonders bevorzugt werden hierbei die Motorlast, die Drehzahl, der Zündsprung oder der Emissionsparameter mit Grenzwerten, insbesondere dem Maximalwert für den Zünddruckanstieg oder den Zünddruck kombiniert.

Im erfindungsgemässen Verfahren wird das Kompressionsverhältnis vorzugsweise über eine Hardwareanpassung des Grossmotors verändert. In der Praxis kann der Grossmotor hierfür eine rotierbare Kurbelwelle umfassen, wobei der Kolben über eine Kolbenstange mit einem Kreuzkopf verbunden ist und der Kreuzkopf über eine Schubstange mit der Kurbelwelle verbunden ist. Das Kompressionsverhältnis wird dann verändert, indem die Kolbenstange und / oder der Kolben relativ zum Kreuzkopf verlagert werden. Selbstverständlich können auch andere aus dem Stand der Technik bekannte mechanische oder hydraulische Hardwareanpassung zum Verändern des Kompressionsverhältnisses verwendet werden.

In der Praxis kann der Betriebsparameter mittels eines Sensors kontinuierlich oder in regelmässigen Abständen erfasst werden. Der Sensor kann hierfür ein virtueller Sensor oder ein realer Sensor sein. Der virtuelle Sensor ist dabei kein real existierender Sensor, sondern eine Abhängigkeitssimulation von stellvertretenden Messgrößen zu einer Zielgröße. Somit wird die Zielgröße nicht direkt gemessen, sondern anhand einer zu ihr korrelierender Messgrößen und eines Modells der Korrelation berechnet.

Ausserdem ist es mit dem erfindungsgemässen Verfahren möglich, im gesamten Betriebs- oder Lastbereich des Grossmotors Schwingungen im Grossmotor, im speziellen Torsionsschwingungen zu minimieren. Torsionsschwingungen treten insbesondere bei speziellen Zylinderzahlen auf. Die Torsionsschwingungen werden hauptsächlich durch Zylinderdruckverläufe bestimmt. Massgebend sind dabei der Zünddruck und der Kompressionsdruck.

Um einen möglichst optimalen Brennstoffverbrauch zu erreichen, sind hohe Zünd- und Kompressionsdrücke erwünscht. Diese können jedoch zu erhöhter Anregung von Torsionsschwingungen führen, insbesondere auch im niedrigen Lastbereich des Grossmotors.

Wird das Kompressionsverhältnis in Abhängigkeit von der Motorlast als Betriebsparameter geändert, können die Schwingungen im allgemeinen und insbesondere Torsionsschwingungen minimiert werden, indem das Kompressionsverhältnis in einem vorgebbaren Lastbereich vergrössert wird. Vorzugsweise wird über die Steuerung oder die Regelung vorgeben, dass unterhalb oder oberhalb einer bestimmten Motorlast, insbesondere von 15% Motorlast, das Kompressionsverhältnis vergrössert oder verkleinert wird.

Durch die Erfindung wird ferner ein Grossmotor vorgeschlagen, der mit einem erfindungsgemässen Verfahren betrieben wird.

Vorzugsweise ist der Grossmotor als längsgespülter Zweitakt-Grossdieselmotor ausgestaltet.

Besonders bevorzugt ist der Grossmotor als Dual-Fuel Grossdieselmotor ausgestaltet, der in einem Flüssigmodus betreibbar ist, in welchem ein flüssiger Brennstoff zur Verbrennung in den Brennraum eingebracht wird, und der ferner in einem Gasmodus betreibbar ist, in welchem ein Gas in flüssigem oder gasförmigen Zustand als Brennstoff in den Brennraum eingebracht wird.

In der Praxis kann der Grossmotor mindestens einen Zylinder umfassen, welcher einem Brennraum aufweist, der durch einen Kolben begrenzt wird, der entlang einer Zylinderachse hin- und herbewegbar angeordnet ist; sowie eine rotierbare Kurbelwelle und eine Kontrollvorrichtung, wobei der Kolben über eine Kolbenstange mit einem Kreuzkopf verbunden ist und der Kreuzkopf über eine Schubstange mit der Kurbelwelle verbunden ist, und die Kontrollvorrichtung eine Schubvorrichtung umfasst, welche eine Position der Kolbenstange und / oder des Kolbens relative zum Kreuzkopf verlagern kann.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der Zeichnung zeigen:
- Fig. 1:: eine schematische Schnittdarstellung eines Ausführungsbeispiels eines erfindungsgemässen Grossmotors
- Fig. 2:: ein schematische Darstellung zur Veranschaulichung der Abhängigkeit des Drehmoments vom Luft-Gas Verhältnis in dem Ausführungsbeispiel des Grossmotors, und
- Fig. 3:: eine schematische Darstellung des Drucks im Zylinder.

Mit dem Begriff "Grossmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder eines Grossmotors jeweils einen Innendurchmesser (Bohrung), der mindestens etwa 200 mm beträgt. Mit dem Begriff "längsgespült" ist gemeint, dass die Spül- oder Ladeluft im Bereich des unteren Endes in den Zylinder eingebracht wird. Die Verbrennungsrückstände, also insbesondere die Abgase, werden am oberen Ende des Zylinders ausgetragen.

Bei der folgenden Beschreibung der Erfindung anhand von Ausführungsbeispielen wird mit beispielhaftem Charakter auf den für die Praxis besonders wichtigen Fall eines Grossmotors Bezug genommen, der als Dual-Fuel Motor ausgestaltet ist, also als ein Motor, der mit zwei unterschiedlichen Brennstoffen betrieben werden kann. Im speziellen kann dieses Ausführungsbeispiel des Grossmotors in einem Flüssigmodus betrieben werden, in welchem nur ein flüssiger Brennstoff in einen Brennraum eines Zylinders eingespritzt wird. Üblicherweise wird der flüssige Brennstoff, beispielsweise Schweröl oder ein Dieselöl, zu einem geeigneten Zeitpunkt direkt in den Brennraum eingespritzt und entzündet sich dort nach dem Diesel-Prinzip der Selbstzündung. Der Grossmotor kann auch in einem Gasmodus betrieben werden, bei dem ein als Brennstoff dienendes Gas, beispielsweise Erdgas, in Form eines vorgemischten Luft-Brennstoff-Gemisches im Brennraum zur Zündung gebracht wird. Im speziellen arbeitet der Grossmotor im Gasmodus nach einem Niederdruckverfahren, d.h. das Gas wird im gasförmigen Zustand in den Zylinder eingebracht, wobei der Einspritzdruck des Gases höchstens 50 bar vorzugsweise höchstens 20 bar beträgt. Das Luft-Gas-Gemisch wird im Brennraum nach dem Otto-Prinzip fremdgezündet. Diese Fremdzündung wird üblicherweise dadurch bewirkt, dass zu einem geeigneten Moment eine kleine Menge selbstzündender flüssiger Brennstoff (z. B. Diesel oder Schweröl) in den Brennraum oder in eine Vorkammer eingebracht wird, der sich dann selbstentzündet und dadurch die Fremdzündung des Luft-Brennstoff-Gemisches im Brennraum verursacht.

Bei den hier beschriebenen Ausführungsbeispielen ist der Grossmotor als längsgespülter Dual-Fuel Zweitakt-Grossdieselmotor ausgestaltet.

Es versteht sich, dass die Erfindung nicht auf diesen Typ von Grossmotor und auf diese Verwendung beschränkt ist, sondern Grossmotoren im Allgemeinen betrifft. Dabei ist es auch möglich, dass der Grossmotor nur für die Verbrennung eines einzigen gasförmigen Brennstoffs, beispielsweise Erdgas ausgestaltet ist. Der Grossmotor kann also auch als Gasmotor ausgestaltet sein. Auch ist es möglich, dass der Grossmotor als Multi-Fuel Grossmotor ausgestaltet ist, der für die Verbrennung von mehr als zwei Brennstoffen ausgestaltet ist, insbesondere auch für die gleichzeitige Verbrennung von zwei oder mehr unterschiedlichen Brennstoffen, auch in verschiedenen Zylindern

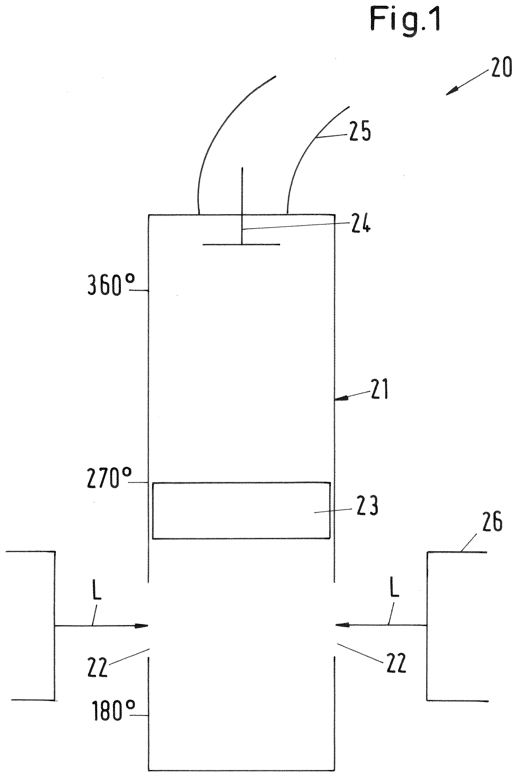

Fig. 1 zeigt in einer stark schematisierten Darstellung einen Zylinder 21 der mehreren Zylinder dieses Ausführungsbeispiels eines Grossmotors, der gesamthaft mit dem Bezugszeichen 20 bezeichnet ist. Im Inneren des Zylinders 21 ist in an sich bekannter Art ein Kolben 23 zwischen einem oberen Totpunkt und einem unteren Totpunkt hin und her bewegbar angeordnet.

Der Aufbau und die einzelnen Komponenten des Grossmotors 20, wie beispielsweise das Einspritzsystem für den Flüssigmodus, das Gaszuführsystem für den Gasmodus, das Gaswechselsystem, das Abgassystem oder das Turboladersystem für die Bereitstellung der Spül- bzw.

Ladeluft, sowie die Kontroll- und Steuerungssystem für einen Grossmotor sind dem Fachmann sowohl für die Ausgestaltung als Zweitaktmotor als auch für die Ausgestaltung als Viertaktmotor hinlänglich bekannt und bedürfen daher hier keiner weiteren Erläuterung. Von diesen Komponenten ist in Fig. 1 nur ein Auslassventil 24 dargestellt, weil dies zum Verständnis der Erfindung ausreichend ist. Das Kontroll- und Steuerungssystem ist in modernen Grossmotoren ein elektronisches System, mit welchem sich üblicherweise alle Motor- oder Zylinderfunktionen, insbesondere die Einspritzung (Beginn und Ende der Einspritzung) und die Betätigung des Auslassventils, einstellen oder steuern bzw. regeln lassen.

Bei dem hier beschriebenen Ausführungsbeispiel eines längsgespülten Zweitakt-Grossdieselmotors 20 sind üblicherweise im unteren Bereich eines jeden Zylinders 21 bzw. Zylinderliners Spülluftschlitze 22 vorgesehen, die durch die Bewegung des Kolbens 23 im Zylinder 21 periodisch verschlossen und geöffnet werden, sodass die von einem Turbolader unter einem Ladeluftdruck in einem Einlassreceiver 26 bereitgestellte Spülluft durch die Spülluftschlitze 22 in den Zylinder 21 einströmen kann, solange diese geöffnet sind. Dies ist in Fig. 1 durch die beiden mit dem Bezugszeichen L versehenen Pfeile angedeutet. Im Zylinderkopf bzw. im Zylinderdeckel ist das meistens zentral angeordnete Auslassventil 24 vorgesehen, durch welches die Verbrennungsgase nach dem Verbrennungsprozess aus dem Zylinder 21 in ein Abgassystem 25 ausgetragen werden können. Das Abgassystem 25 leitet zumindest einen Teil der Verbrennungsgase zu einer Turbine (nicht dargestellt) des Turboladers, dessen Kompressor die Ladeluft im Einlassreceiver 26 unter dem Ladeluftdruck bereitstellt. Der Ladeluftdruck wird dabei üblicherweise über ein sogenanntes Waste-Gate-Ventil eingestellt, mit welchem die Menge der Verbrennungsgase eingestellt wird, welche der Turbine des Turbolader zugeführt wird.

Für das Einbringen des flüssigen Brennstoffs in den Brennraum des Zylinders 21 sind ein oder mehrere Brennstoffeinspritzdüsen vorgesehen (nicht dargestellt), die beispielsweise im Zylinderkopf in der Nähe des Auslassventils 24 angeordnet sind. Für die Gaszuführung im Gasmodus ist ein Gaszuführsystem vorgesehen (nicht dargestellt), das mindestens ein Gaseinlassventil mit einer Gaseinlassdüse umfasst. Die Gaseinlassdüse ist typischerweise in der Wandung des Zylinders vorgesehen, beispielsweise auf einer Höhe, die etwa in der Mitte zwischen dem oberen und dem unteren Totpunkt des Kolbens 23 liegt.

In Fig. 1 sind zusätzlich an der linken Seite verschiedene Kurbelwinkel angegeben. Der Kurbelwinkel gibt die Stellung der Kurbelwelle an und kennzeichnet in an sich bekannter Weise den Arbeitszyklus des Grossdieselmotors 20. Bei dem Kurbelwinkel von 180° befindet sich der Kolben 23 im unteren Tot- oder Umkehrpunkt, bei dem Kurbelwinkel von 360° befindet sich der Kolben 23 im oberen Tot- oder Umkehrpunkt. Bei der Ausgestaltung als Zweitaktmotor umfasst ein kompletter Arbeitszyklus 360°. Beginnend bei dem Kurbelwinkel von 0° - bei welcher der Kolben 23 in der gleichen Position ist wie bei 360°, nämlich im oberen Totpunkt - bewegt sich der Kolben 23 beim Expansionshub nach unten bis er bei 180° den unteren Totpunkt erreicht und sich dann beim Kompressionshub wieder nach oben bewegt, bis er den oberen Totpunkt bei 360° erreicht. In der Darstellung von Fig. 1 befindet sich der Kolben 23 gerade in einer Stellung, die dem Kurbelwinkel 270° entspricht.

Im Folgenden wird ferner beispielhaft auf den Anwendungsfall Bezug genommen, dass der Grossdieselmotor das Antriebsaggregat eines Schiffes ist.

Aufgrund der gesetzlichen Bestimmungen bezüglich der Abgaswerte müssen heute Grossdieselmotoren in Küstennähe häufig im Gasmodus betrieben werden, weil sonst die vorgeschriebenen Grenzwerte für den Abgasausstoss, insbesondere sind dies Stickoxide NOₓ und Schwefeldioxide, nicht mehr eingehalten werden können.

Die vorliegende Erfindung bezieht sich insbesondere auf den Betrieb des Grossmotors 20 im Gasmodus.

Im Gasmodus sind die Effizienz und die möglichst schadstoffarme Verbrennung des Luft-Brennstoff-Gemisches ganz empfindlich von dem Verhältnis der Menge an Luft und der Menge des als Brennstoff verwendeten Gases abhängig. Dieses Luft-Brennstoffverhältnis wird üblicherweise durch den Lambda-Wert (λ-Wert) angegeben, welcher das Verhältnis aus der im Zylinder gefangenen Luftmasse zu derjenigen Luftmasse angibt, welche für eine stöchiometrische Verbrennung benötigt wird.

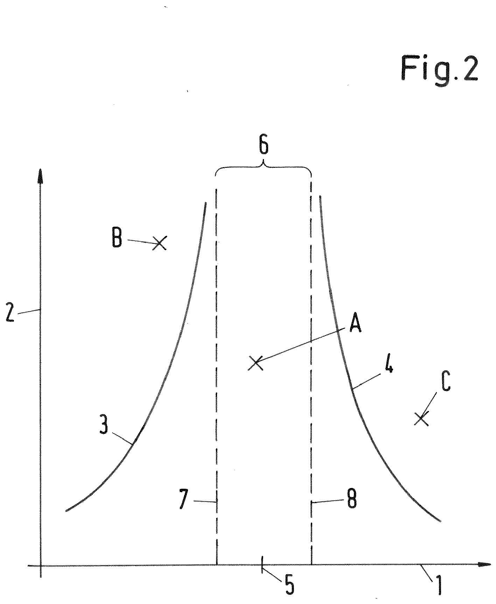

Fig. 2 zeigt in einer schematischen Darstellung einen beispielhaften Zusammenhang zwischen dem Luft-Brennstoff-Verhältnis 1 und dem vom Motor generierten Drehmoment 2, welches das Schiff antreibt. Diese Darstellung gilt für ein bestimmtes Drehmoment, was einer bestimmten Geschwindigkeit des Schiffes - oder einer bestimmten Drehzahl des Motors -, entspricht, wenn sich das Schiff in im Wesentlichen ruhigem Gewässer bewegt. Im speziellen ist das in Fig. 2 dargestellte Drehmoment 2 das BMEP (Brake Mean Effective Pressure), was im Wesentlichen ein über einen Arbeitszyklus gemitteltes Drehmoment ist.

In der Darstellung in Fig. 2 sind für den Gasmodus zwei Grenzkurven zu sehen, nämlich eine Klopfgrenze (knocking-Kurve) 3 und eine Zündaussetzgrenze (misfiring-Kurve) 4. Bei Betriebszuständen, die sich darstellungsgemäss links der Klopfgrenze 3 befinden, also beispielsweise am Punkt B, ist das Luft-Brennstoff-Gemisch zu fett, das heisst es ist zu wenig Luft im Gemisch. Ein zu fettes Gemisch kann zu verschiedenen Problemen führen, nämlich dass die Verbrennung zu schnell abläuft (fast combustion) oder, dass der Motor zu klopfen beginnt, oder dass das Gemisch im Zylinder 21 dann üblicherweise durch Selbstzündung aufgrund des zu hohen Gehalts an Gas zu früh (bezogen auf den Arbeitszyklus) zu verbrennen beginnt (preignition). Bei Betriebszuständen, die darstellungsgemäss oberhalb der Zündaussetzgrenze 4 liegen, also beispielsweise am Punkt C, ist das Luft-Brennstoff-Gemisch zu mager, das heisst es ist nicht genügend Gas - oder zu viel Luft - für eine optimale Verbrennung im Brennraum vorhanden.

Daher ist man bemüht, den Grossdieselmotor insbesondere im Gasmodus stets an einem optimalen Punkt 5 für das Luft-Brennstoff-Verhältnis zu betreiben, also in Fig. 1 beispielsweise an dem Betriebspunkt A. In der Praxis sind natürliche Schwankungen des Drehmoments bzw. des Luft-Brennstoff-Verhältnisses 1 auch bei konstanter Drehzahl bzw. konstanter Geschwindigkeit des Schiffes nicht zu vermeiden bzw. nicht regelbar, daher gibt es einen Toleranzbereich 6, der in Fig. 2 durch die beiden Geraden 7 und 8 begrenzt ist, innerhalb dessen Abweichungen des Luft-Brennstoff-Verhältnisses 1 vom optimalen Punkt 5 toleriert werden.

Man ist daher stets bemüht, das Luft-Brennstoffverhältnis für das jeweilige Drehmoment so einzustellen, dass der Grossmotor in dem Toleranzbereich 6 betrieben wird.

Erfindungsgemäss wird nun vorgeschlagen, kontinuierlich oder in regelmässigen Abständen einen Betriebsparameter des Grossmotors zu ermitteln und anhand des Betriebsparameters ein optimiertes Kompressionsverhältnis zu bestimmen, das für die momentane Last, mit welcher der Grossmotor betrieben wird, einen möglichst hohen Wirkungsgrad ermöglicht. So kann beispielsweise in einem Teillastbereich das Kompressionsverhältnis erhöht werden, was zu einer höheren Kompressionsendtemperatur führt, wobei sich das Luft-Brennstoffverhältnis zumindest nicht wesentlich ändert.

Das Luft-Brennstoffverhältnis kann jedoch zusätzlich erhöht werden, falls eine Waste-Gate-Marge vorhanden ist, so dass weitere Wirkungsgradpotentiale durch eine weitere Erhöhung des Verdichtungsverhältnisses erschlossen werden können. Der Abgasbypass, also der Massenstrom des Abgases, der die Turbine des Turboladers umgeht, wird üblicherweise mit dem Wast-Gate-Ventil eingestellt oder geregelt, welches beispielsweise als ein analoges Ventil ausgestaltet sein kann.

Die Änderung des Kompressionsverhältnisses erfolgt vorzugsweise mechanisch, beispielsweise in einem Motor mit Kreuzkopfantrieb, indem die Kolbenstange und/oder der Kolben relativ zum Kreuzkopf verschoben bzw. bewegt wird, so dass sich die geometrischen Abmessungen des Brennraums ändern.

Auf diese Weise kann der Grossmotor in jedem Lastbereich mit einem optimierten Wirkungsgrad betrieben werden, was einen besonders effizienten und wirtschaftlichen Betrieb des Grossmotors ermöglicht.

Als Betriebsparameter, der kontinuierlich oder in regelmässigen Abständen ermittelt wird, sind einige Parameter bevorzugt, die im Folgenden in nicht abschliessender Aufzählung erläutert werden.

Beispielsweise kann die Motorlast, bei welcher der Grossmotor betrieben wird, angegeben in Prozent der Volllast, als Betriebsparameter verwendet werden. In Abhängigkeit von der Motorlast kann das Kompressionsverhältnis dabei vorzugsweise mittels eine Look-up-Tabelle auf einen möglichst optimalen Wirkungsgrad im Toleranzbereicht 6 geregelt werden, oder alternativ entsprechend gesteuert werden.

Es ist auch möglich, die Drehzahl, mit welcher der Grossmotor 20 betrieben wird, als Betriebsparameter zu verwenden. In Abhängigkeit von der Drehzahl kann das Kompressionsverhältnis dabei vorzugsweise mittels einer Look-up-Tabelle auf einen möglichst optimalen Wirkungsgrad im Toleranzbereicht 6 geregelt werden, oder alternativ entsprechend gesteuert werden.

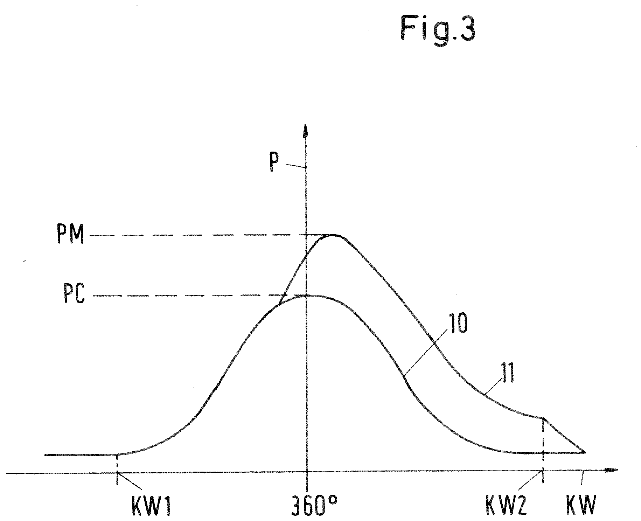

Eine weitere Möglichkeit besteht darin, einen Zünddruck im Innern des Zylinders 21 als Betriebsparameter heranzuziehen. Ein Beispiel hierzu wird anhand von Fig. 3 erläutert. Fig. 3 zeigt eine schematische Darstellung eines Zylinderdrucks p im Inneren des Zylinders 21 in Abhängigkeit vom Kurbelwinkel KW. Bei dem Kurbelwinkel KW1 wird das Auslassventil 24 geschlossen und die Kompression beginnt. Bei dem Kurbelwinkel KW=360°, welcher identisch mit dem Kurbelwinkel KW=0° ist, befindet sich der Kolben 23 im oberen Totpunkt, das heisst der Brennraum hat minimales Volumen (maximale Kompression). Bei dem Kurbelwinkel KW2 wird das Auslassventil 24 geöffnet. Die Kurve 10 zeigt den Druckverlauf im Zylinder 21 für den Fall, dass keine Verbrennung im Zylinder 21 erfolgt, repräsentiert also die "geometrische" Kompression, die alleine durch die Kolbenbewegung im Zylinder 21 verursacht wird. Die Kurve 11 zeigt den Druck im Zylinder 21 für den Fall, dass ein Verbrennungsprozess im Zylinder 21 stattfindet. Die Differenz zwischen den Kurven 10 und 11 stellt also den durch den Verbrennungsprozess verursachten Druckunterschied dar.

Das Maximum der Kurve 10, das natürlich bei dem Kurbelwinkel KW=360° liegt, welcher dem Kurbelwinkel KW=0° entspricht, wird als Kompressionsdruck PC bezeichnet. Das Maximum der Kurve 11, das üblicherweise verschoben zu dem Kurbelwinkel KW=360° liegt, wird als Zünddruck PM bezeichnet. Als Zündsprung (firing ratio) wird dann das Verhältnis aus dem Zünddruck PM und dem Kompressionsdruck PC, also PM/PC bezeichnet. Der Zündsprung ist eine Funktion des Lambda-Wertes, also des Luft-Brennstoffverhältnisses, sowie des Zündzeitpunktes und des Kompressionsverhältnisses. Üblicherweise wird der Zündsprung kleiner, wenn der Lambda-Wert grösser wird. Daher können sowohl der Zünddruck als auch der Zündsprung als Betriebsparameter verwendet werden.

Des Weitern hängt auch der Anstieg der Kurve 11 in dem Druckbereich oberhalb von PC, also dort wo die Verbrennung stattfindet, mit dem Luft-Brennstoff-Verhältnis zusammen, sodass auch der Zünddruckanstieg, also die Druckänderung in Abhängigkeit von der Änderung des Kurbelwinkels KW als Betriebsparameter herangezogen werden kann.

Es versteht sich, dass natürlich auch mehr als ein Betriebsparameter verwendet werden kann, um das Kompressionsverhältnis zu verändern.

Der Grossmotor 20 kann eine Kontrollvorrichtung umfassen, die eine Schubvorrichtung besitzt. Ist der Kolben 23 über eine Kolbenstange mit einem Kreuzkopf verbunden und der Kreuzkopf über eine Schubstange mit einer rotierbaren Kurbelwelle verbunden (alles nicht gezeigt), kann die Schubvorrichtung eine Position der Kolbenstange und / oder des Kolben relativ zum Kreuzkopf verlagern, sodass das Kompressionsverhältnis verändert wird.

## Patentansprüche

1. Verfahren zum Betreiben eines Grossmotors, wobei der Grossmotor (20) mindestens einen Zylinder (21) umfasst, welcher einen Brennraum aufweist, der durch einen entlang einer Zylinderachse hin- und herbewegbaren Kolben (23) begrenzt wird, wobei ein Luft-Brennstoffgemisch im Brennraum über die Bewegung des Kolbens (23) mit einem Kompressionsverhältnis verdichtet wird, und wobei ein Betriebsparameter des Grossmotors (20) kontinuierlich oder in regelmässigen Abständen ermittelt wird, **dadurch gekennzeichnet dass** anhand des Betriebsparameters ein optimiertes Kompressionsverhältnis für das Luft-Brennstoffgemisch ermittelt wird, und das Kompressionsverhältnis auf das optimierte Kompressionsverhältnis umgestellt wird.

2. Verfahren nach Anspruch 1, wobei das Kompressionsverhältnis in Abhängigkeit des Betriebsparameters gesteuert wird.

3. Verfahren nach Anspruch 1, wobei das Kompressionsverhältnis in Abhängigkeit des Betriebsparameters geregelt wird.

4. Verfahren nach einem der vorangehenden Ansprüche, wobei ein Luft-Brennstoffverhältnis derart eingestellt wird, dass das Luft-Brennstoffverhältnis zwischen einer Klopfgrenze (3) und einer Zündaussetzgrenze (4) liegt.

5. Verfahren nach einem der vorangehenden Ansprüche, wobei der Grossmotor (20) weiter eine rotierbare Kurbelwelle umfasst, und der Kolben (23) über eine Kolbenstange mit einem Kreuzkopf verbunden ist, und der Kreuzkopf über eine Schubstange mit der Kurbelwelle verbunden ist, wobei das Kompressionsverhältnis verändert wird, indem die Kolbenstange und / oder der Kolben relativ zum Kreuzkopf verlagert werden.

6. Verfahren nach einem der vorangehenden Ansprüche, wobei der Betriebsparameter eine Motorlast und / oder eine Drehzahl ist.

7. Verfahren nach einem der Ansprüche 1 bis 6, wobei der Betriebsparameter ein Zündsprung ist, und der Zündsprung insbesondere konstant ist oder von einer Motorlast und / oder einer Drehzahl abhängig ist.

8. Verfahren nach einem der Ansprüche 1 bis 7, wobei der Betriebsparameter ein Zünddruck ist, und der Zünddruck insbesondere konstant ist oder von einer Motorlast und / oder einer Drehzahl abhängig ist.

9. Verfahren nach einem der Ansprüche 1 bis 8, wobei der Betriebsparameter ein Zünddruckanstieg ist, und der Zünddruckanstieg insbesondere konstant ist oder von einer Motorlast und / oder einer Drehzahl abhängig ist.

10. Verfahren nach einem der Ansprüche 1 bis 5, wobei der Betriebsparameter ein Emissionsparameter ist, und der Emissionsparameter insbesondere konstant ist oder von einer Motorlast und / oder einer Drehzahl abhängig ist.

11. Verfahren nach einem der vorangehenden Ansprüche, wobei der Betriebsparameter das Transientverhalten ist, welches eine Laständerung oder eine Drehzahländerung ist, und wobei das Kompressionsverhältnis in Abhängigkeit des Betriebsparameters geregelt wird.

12. Verfahren nach einem der vorangehenden Ansprüche, wobei der Grossmotor (20) in einem Gasmodus betrieben wird.

13. Verfahren nach einem der vorangehenden Ansprüche, wobei der Betriebsparameter mittels eines Sensors kontinuierlich oder in regelmässigen Abständen erfasst wird, und der Sensor ein virtueller Sensor oder ein realer Sensor ist.

14. Grossmotor, **dadurch gekennzeichnet, dass** der Grossmotor (20) mit einem Verfahren gemäss einem der vorangehenden Ansprüche betrieben wird.

15. Grossmotor nach Anspruch 13 umfassend mindestens einen Zylinder (21), welcher einem Brennraum aufweist, der durch einen Kolben (23) begrenzt wird der entlang einer Zylinderachse hin- und herbewegbar angeordnet ist; sowie eine rotierbare Kurbelwelle und eine Kontrollvorrichtung, wobei der Kolben (23) über eine Kolbenstange mit einem Kreuzkopf verbunden ist und der Kreuzkopf über eine Schubstange mit der Kurbelwelle verbunden ist, und die Kontrollvorrichtung eine Schubvorrichtung umfasst, welche eine Position der Kolbenstange und / oder des Kolbens (23) relativ zum Kreuzkopf verlagern kann.

16. Grossmotor nach einem der Ansprüche 13 oder 14, ausgestaltet als Dual-Fuel Grossdieselmotor, der in einem Flüssigmodus betreibbar ist, in welchem ein flüssiger Brennstoff zur Verbrennung in den Brennraum eingebracht wird, und der ferner in einem Gasmodus betreibbar ist, in welchem ein Gas in den Brennraum eingebracht wird.
